# FASCICULE DE BREVET EUROPEEN

(11) **EP 2 920 026 B1**
(45) Date de publication et mention de la délivrance du brevet: **14.09.2016**
(21) Numéro de dépôt: 13785443.6
(22) Date de dépôt: 30.10.2013
(51) Int. Cl.: B60N 2/44, B60N 2/06, B60N 2/02, B60R 16/02, H02G 11/00

(54) **SIÈGE DE VÉHICULE AUTOMOBILE COMPORTANT UN DISPOSITIF DE SUPPORT POUR UN CONNECTEUR ÉLECTRIQUE ET VÉHICULE AUTOMOBILE ASSOCIÉ**
KRAFTFAHRZEUGSITZ MIT EINER TRÄGERVORRICHTUNG FÜR EINEN ELEKTRISCHEN VERBINDER UND ENTSPRECHENDES KRAFTFAHRZEUG
MOTOR VEHICLE SEAT COMPRISING A SUPPORT DEVICE FOR AN ELECTRICAL CONNECTOR AND ASSOCIATED MOTOR VEHICLE

(30) Priorité: 16.11.2012 FR 1260902
(43) Date de publication de la demande: 23.09.2015
(73) Titulaire: Renault S.A.S., 92100 Boulogne-Billancourt (FR)
(72) Inventeur: NICOD, Pascal, 78330 Fontenay Le Fleury (FR); LARVOR, Phlippe, 78960 Voisins Le Bretonneux (FR); GINFRAY, Sylvain, 78650 Saulx Marchais (FR)
(86) Numéro de dépôt international: PCT/EP2013/072683
(87) Numéro de publication internationale: WO 2014/075920

(56) Documents cités:
- FR-A1- 2 924 390
- FR-A3- 2 924 391

## Description

La présente invention concerne un siège d'un véhicule automobile, comprenant une armature avec deux parties latérales adaptées à être fixées au châssis du véhicule, et un dispositif de support pour un connecteur électrique, ledit dispositif de support comprenant un premier élément de support et un deuxième élément de support monté à rotation sur le premier élément de support et comportant des moyens de réception dudit connecteur électrique. Un tel siège est connu du document FR-A-2 924 391.

### ARRIERE-PLAN TECHNOLOGIQUE

Lors de la construction d'un véhicule automobile, notamment lors du montage d'un siège de véhicule automobile sur le châssis de ce véhicule, il est nécessaire de raccorder électriquement au câblage électrique principal du véhicule, les câbles électriques situés sous le siège du véhicule. Les câbles électriques situés sous ce siège automobile permettent d'alimenter des dispositifs électriques du siège, par exemple des dispositifs électriques de réglage en hauteur du siège ou de réglage de l'inclinaison du dossier du siège ou encore d'autres dispositifs tels que airbag ou ceinture électrique de ce siège.

Les câbles électriques arrière sont habituellement raccordés aux câbles électriques du siège automobile par l'intermédiaire de connecteurs électriques disposés sous le siège.

Les connecteurs électriques doivent en effet être accessibles au moment du montage du véhicule pour effectuer le raccordement, mais devenir ensuite inaccessibles pour l'utilisateur du véhicule afin que celui-ci ne puisse pas déconnecter les câble électriques reliés à ce connecteur par accident.

Ces contraintes rendent le raccordement des câbles électriques au connecteur difficile au moment du montage.

### OBJET DE L'INVENTION

Afin de résoudre les inconvénients précités de l'état de la technique, la présente invention propose un dispositif de support pour connecteurs électriques qui permet un accès facile aux connecteurs pour leur raccordement au cours du montage du véhicule tout en empêchant l'accès ultérieur à ces connecteurs par l'utilisateur du véhicule.

Plus particulièrement, on propose selon l'invention un siège tel que décrit en introduction, dans lequel ledit premier élément de support s'étend à partir d'uniquement une première des deux parties latérales de l'armature du siège, à l'exclusion de la deuxième partie latérale.

Cette solution présente en outre l'avantage de permettre une immobilisation efficace des câbles électriques et des connecteurs associés au siège afin que les câbles électriques connectés à chaque connecteur ne puissent pas se déconnecter accidentellement.

Il peut s'agir en outre de différents types de siège automobile, notamment siège avant ou arrière, banquette avant ou arrière.

Le fait que le premier élément de support s'étende à partir d'uniquement l'une des parties latérales de l'armature du siège permet de faciliter la connexion du connecteur électrique supporté par le support de connecteur. En effet, l'opérateur chargé du montage du siège et de la connexion dudit connecteur électrique étant placé à l'extérieur du véhicule lors de la connexion du connecteur électrique, il est ainsi possible de disposer préférentiellement le premier élément de support sur la partie latérale de l'armature du siège située à proximité de l'extérieur du véhicule. Le support de connecteur est ainsi facilement accessible par l'opérateur.

En outre, l'opérateur peut ainsi facilement effectuer la rehausse du siège qui est nécessaire pour certaines opérations de montage du siège, sans être gêné par le support de connecteur.

D'autres caractéristiques non limitatives et avantageuses du dispositif de support conforme à l'invention sont les suivantes :
- le siège automobile étant monté mobile en translation sur le châssis du véhicule automobile par l'intermédiaire de deux glissières comportant chacune une partie mobile appartenant à l'une des deux partie latérales de l'armature du siège et une partie fixe appartenant au châssis du véhicule automobile, ledit premier élément de support s'étend à partir d'uniquement l'une des deux parties mobiles de glissière de ce siège automobile ;
- ledit premier élément de support est une pièce distincte de l'armature du siège et comporte des moyens de fixation sur l'une exclusivement desdites deux parties latérales de l'armature du siège ;
- lesdits moyens de fixation du premier élément de support comprennent un clip ;
- lesdits moyens de fixation du premier élément de support comprennent un orifice pour le passage d'une vis de fixation ;
- ledit premier élément de support vient de formation avec l'une exclusivement desdites deux parties latérales de cette armature du siège ;
- lesdits premier et deuxième éléments de support comportent au moins chacun une partie plane, et la partie plane dudit deuxième élément de support pivote parallèlement à la partie plane dudit premier élément de support, autour d'un axe de rotation disposé perpendiculairement à ces deux parties planes ;
- ledit deuxième élément de support étant adapté à pivoter par rapport au premier élément de support entre deux positions extrêmes, il est prévu des moyens de retenue du deuxième élément de support au moins dans l'une de ces deux positions extrêmes ;
- lesdits moyens de réception du connecteur électrique du deuxième élément de support comprennent au moins deux clips de câblage pour le maintien de chaque câble électrique relié à ce connecteur électrique ;
- ledit deuxième élément de support étant adapté à pivoter par rapport au premier élément de support entre deux positions extrêmes, dans une première des deux positions extrêmes du deuxième élément de support, celui-ci dépasse d'une assise du siège de manière à être accessible à l'extérieur du siège automobile, et dans la deuxième position extrême, le dispositif de support est entièrement logé sous l'assise du siège automobile, entre lesdites deux parties latérales de l'armature du siège.

L'invention concerne également un véhicule automobile comportant un châssis et un siège monté sur ce châssis et tel que décrit précédemment, dans lequel le dispositif de support s'étend entre une assise de ce siège et le plancher du châssis du véhicule automobile.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique partielle de l'avant d'un siège automobile selon l'invention, comportant un premier mode de réalisation d'un dispositif de support d'un connecteur électrique, dans une position dans laquelle il est entièrement logé sous le siège automobile,
- la figure 2 est une vue schématique similaire à celle de la figure 1, dans laquelle le dispositif de support est dans une position déployée dans laquelle il dépasse du siège automobile,
- la figure 3 est une vue schématique en perspective arrière d'un deuxième mode de réalisation du dispositif de support représenté sur la figure 1,
- la figure 4 est une vue schématique en perspective avant du dispositif de support de la figure 3.

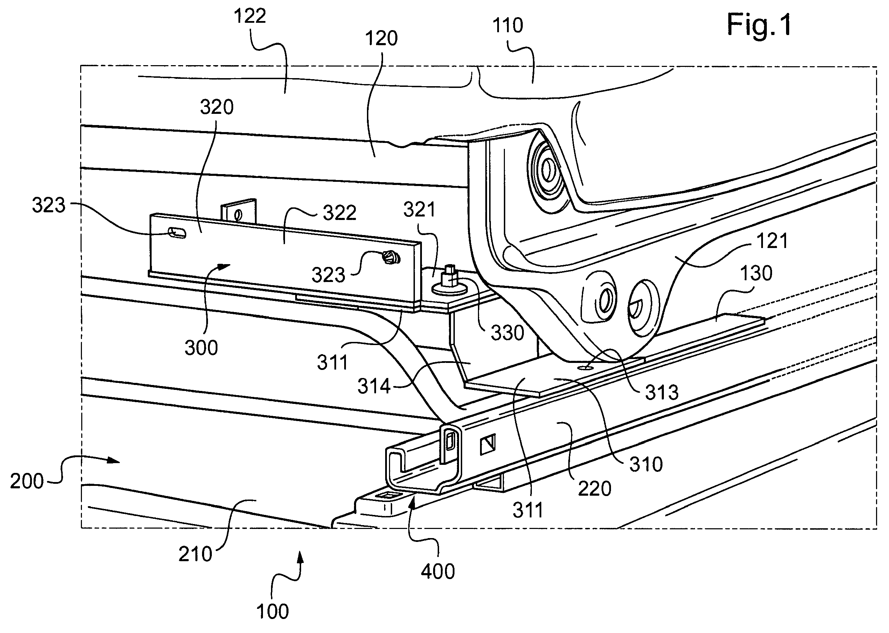

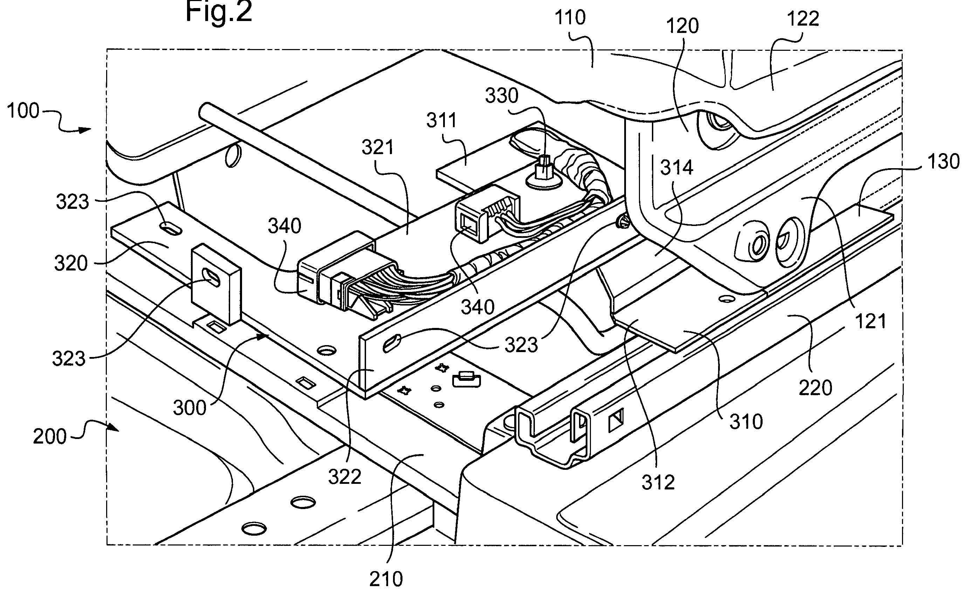

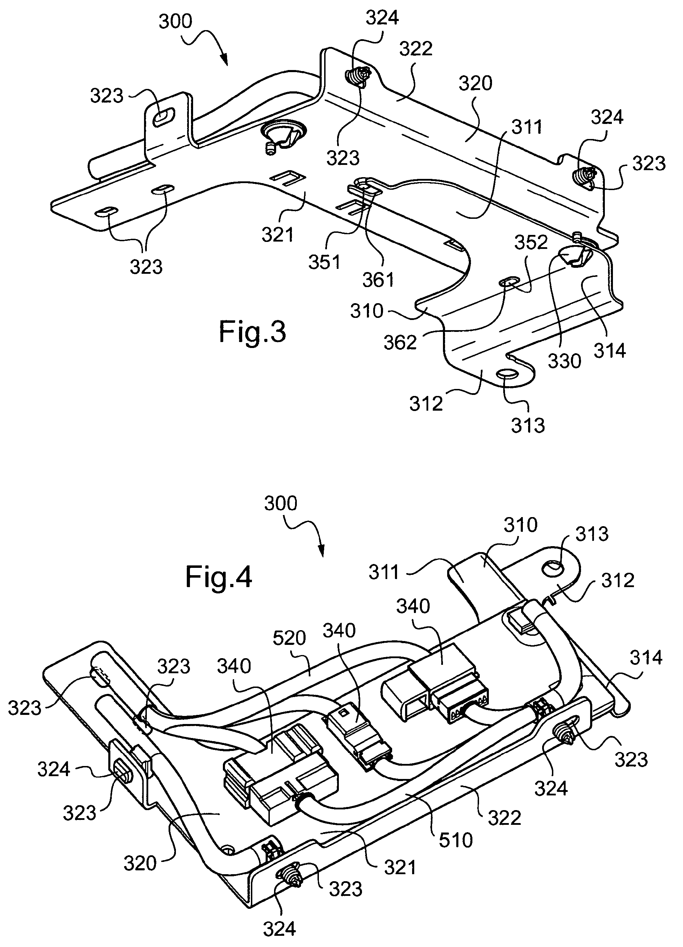

Sur les figures 1 et 2, on a représenté un siège automobile 100 pour un véhicule automobile conforme à l'invention. Ce siège 100 comporte un dispositif de support 300 pour un connecteur électrique de ce siège, dont deux exemples de réalisation sont représentés sur les figures 1 à 4. Il s'agit ici d'un dispositif de support 300 adapté à supporter une pluralité de connecteurs électriques, ici deux connecteurs électriques 340, représentés sur les figures 2 et 4.

Les deux exemples de réalisation du dispositif de support 300 présentés respectivement sur les figures 1 et 2 et sur les figures 3 et 4 sont très proches et leurs différents éléments seront référencés par les mêmes numéros. Ces deux exemples ne diffèrent que par la réalisation pratique des éléments du dispositif de support 300 : par assemblage de plaques planes sur les figures 1 et 2 ou par moulage de matière plastique sur les figures 3 et 4.

Le siège automobile 100 est ici destiné à être disposé à l'avant du véhicule automobile. En variante, il peut s'agir de tout siège automobile.

On qualifiera ici d'éléments « avant », les éléments orientés vers l'avant du véhicule automobile, c'est-à-dire orientés vers le tableau de bord du véhicule.

Les figures 1 et 2 montrent une partie avant de ce siège automobile 100.

Celui-ci comporte une armature 120 métallique sur laquelle est fixé un revêtement textile 110.

L'armature 120 recouverte du revêtement textile 110 définit un dossier (non représenté) et une assise 122 de ce siège 100.

De manière classique, l'assise 122 du siège 100 est destinée à s'étendre sensiblement parallèlement au plancher du châssis 200 du véhicule automobile. Le dossier du siège 100 forme un angle supérieur ou égal à 90 degrés avec l'assise 122 dans une position d'utilisation du siège par un passager.

Le siège automobile 100 est destiné à être monté sur le châssis 200 du véhicule automobile.

A cet effet, l'armature 120 comporte notamment deux parties latérales 121 adaptées à relier le siège 100 au châssis 200 du véhicule.

Les figures 1 et 2 montrent uniquement l'une des deux parties latérales de l'armature du siège 100. L'autre partie latérale est symétrique de la partie latérale représentée par rapport à un plan de symétrie médian du siège.

Ces deux parties latérales 121 de l'armature 120 du siège 100 comportent ici deux ailes métalliques de forme allongée qui s'étendent sous l'assise 122 du siège 120, sensiblement perpendiculairement à cette assise 122 et selon des plans moyens parallèles entre eux. Elles sont destinées à s'étendre selon un axe longitudinal du véhicule, sensiblement parallèlement aux portières du véhicule, lorsque le siège 100 est monté sur le châssis 200 de ce véhicule.

Le châssis 200 du véhicule automobile comporte notamment un plancher 210.

Ici, le siège automobile 100 est destiné à être monté à translation sur le plancher 210 du châssis 200 par l'intermédiaire de deux glissières 400. Il est ainsi prévu deux glissières 400 parallèles et disposées selon l'axe longitudinal du véhicule automobile, pour permettre une translation d'avant en arrière et d'arrière en avant du siège 100 par rapport au châssis 200 du véhicule.

Chacune des deux glissières 400 comporte une partie fixe 220, appartenant au plancher 210 du véhicule automobile et immobilisée sur ce plancher 210, ainsi qu'une partie mobile 130, appartenant au siège automobile 100, fixe par rapport à ce siège automobile 100 et adaptée à coulisser dans la partie fixe 220 de la glissière 400.

Plus précisément, la partie mobile 130 de chaque glissière 400 appartient ici à l'une des deux parties latérales 121 de l'armature 120 du siège 100.

Cette partie mobile 130 de glissière peut venir de formation avec la partie latérale 121 correspondante de l'armature du siège ou être rapportée sur elle par exemple par vissage.

Elle est ici fixée sur le bord libre de chaque aile des parties latérales 121 de l'armature 120.

Comme représenté sur les figures 1 et 2, la partie fixe 220 de chaque glissière 400 est ici un profilé dont la section présente une forme globalement en « U », dont le fond est fixé sur le plancher 210 du véhicule, par exemple par vissage. Ce profilé délimite intérieurement une rainure, ouverte en direction du siège automobile.

La partie mobile 130 de chaque glissière 400 du siège automobile 100 est un profilé dont la section permet le coulissement à l'intérieur de la rainure délimitée par la partie fixe 220 de cette glissière 400.

Sur l'exemple représenté ici, le coulissement du siège automobile dans la rainure de la partie fixe 220 de chaque glissière 400 est commandé manuellement par l'utilisateur du véhicule.

Afin de permettre le réglage en hauteur du siège 100 ou le réglage de l'inclinaison du dossier de ce siège, il est en outre prévu à l'intérieur de celui-ci un ou plusieurs dispositifs de commande électriques.

Chaque dispositif de commande électrique du siège 100 est alimenté par un câble électrique 520 (figure 4), appelé dans la suite « câble d'alimentation ». Chaque câble d'alimentation 520 des dispositifs de commande électrique du siège automobile 100 doit être connecté à l'un des câbles électriques 510 (figures 2 et 4) provenant de l'arrière du véhicule et connectés à un câblage principal du véhicule, par exemple à la batterie électrique de ce véhicule automobile. Ces câbles électriques 510 reliés au câblage principal du véhicule sont appelés dans la suite « câbles arrière » du véhicule automobile.

Ce câblage principal du véhicule émerge par exemple sous le siège 100 à travers une ouverture du plancher 210 du châssis 200 du véhicule.La connexion des câbles d'alimentation 520 des dispositifs de commande électrique du siège et des câbles arrière 510 du véhicule est réalisée ici par l'intermédiaire de deux connecteurs électriques 340 (voir figure 2) disposés sous le siège automobile 100, dans l'espace compris entre l'assise 122 du siège 100 automobile et le plancher 210 du châssis 200 du véhicule.

Chaque connecteur électrique 340 comporte un boîtier adapté à recevoir en entrée les câbles arrière 510 et à réaliser la connexion électrique de ces câbles arrière 510 avec les câbles d'alimentation 520 sortant de ce connecteur électrique.

Le siège automobile 100 comporte ici un dispositif de support 300 pour ces connecteurs électriques 340 (figures 1 à 4).

Ce dispositif de support 300 est logé sous le siège automobile 100 dans l'espace compris entre l'assise 122 du siège automobile 100 et le plancher 210 du châssis 200 du véhicule.

Ce dispositif de support 300 comporte un premier élément de support 310 et un deuxième élément de support 320 monté à rotation sur le premier élément de support 310 et comportant des moyens de réception desdits connecteurs électriques 340.

De manière remarquable, ledit premier élément de support 310 s'étend à partir d'uniquement une première des deux parties latérales 121 de l'armature 120 du siège 100, à l'exclusion de la deuxième partie latérale.

Le premier élément de support 310 présente ici un profil en marche d'escalier. Il comporte ainsi une plaque 311 plane prolongée par une partie intermédiaire 314 s'étendant ici globalement perpendiculairement à cette plaque 311. Une languette d'accrochage 312 s'étend à partir de cette partie intermédiaire 314, perpendiculairement à celle-ci et porte les moyens de fixation sur le siège automobile.

Le premier élément de support 310 joue ainsi un rôle de mise à niveau des connecteurs en plus de son rôle de fixation sur le siège automobile puisqu'il permet d'amener le deuxième élément de support 320 à une hauteur prédéfinie par rapport au plancher 210 du châssis 200 du véhicule.

Dans les deux exemples de réalisation représentés ici, ledit premier élément de support 310 est une pièce distincte de l'armature 120 du siège 100 et comporte des moyens de fixation 313 sur l'une exclusivement desdites deux parties latérales de l'armature du siège 100.

Ces moyens de fixation sont portés par la languette d'accrochage 312 du premier élément de support 310 et sont adaptés à fixer ce premier élément de support 310 sur ladite partie mobile 130 de l'une des deux glissières 400 de ce siège automobile 100 qui appartient à ladite première partie latérale 121 de l'armature 120 du siège 100.

Il s'agit ici de la partie mobile 130 de la glissière 400 située à droite du siège automobile 100 lorsqu'on regarde celui-ci depuis l'avant du véhicule automobile. En variante, on peut évidemment prévoir de fixer le dispositif de support sur l'autre glissière, c'est-à-dire sur la deuxième partie latérale de l'armature 120 du siège 100 située à gauche du siège automobile lorsqu'on regarde celui-ci depuis l'avant du véhicule.

Plus précisément, comme représenté sur les figures 1 à 4, la languette d'accrochage 312 du premier élément de support 310 comporte un orifice 313 adapté au passage d'une vis de fixation sur la partie mobile 130 de la glissière 400.

En variante, on peut envisager tout autre moyen de fixation connu de l'homme du métier.

Le deuxième élément de support 320 comporte une platine 321 plane, qui présente ici une forme de L.

Cette platine 321 du deuxième élément de support 320 est montée à rotation sur la plaque 311 du premier élément de support 310. A cet effet, il est prévu un axe de rotation 330 qui traverse la platine 321 à l'extrémité libre de l'une des branches du L formée par cette platine 321 (voir figures 3 et 4), ici la grande branche du L. Cet axe de rotation 330 est fixé sur la plaque 311 du premier élément de support 310. Il s'étend perpendiculairement à la platine 321 du deuxième élément de support 320 et à la plaque du premier élément de support 310.

La platine 321 du deuxième élément de support 320 pivote donc parallèlement à la plaque 311 du premier élément de support 310. Elle repose ici en outre sur la plaque 311 du premier élément de support 310.

Plus précisément, le deuxième élément de support 320 est ainsi adapté à pivoter par rapport au premier élément de support 310 entre deux positions extrêmes dont une première position, appelée dans la suite « position repliée » dans laquelle le dispositif de support 300 est entièrement logé sous l'assise 122 du siège automobile 100, et une deuxième position, appelée dans la suite « position déployée » dans laquelle ledit deuxième élément de support 320 dépasse au moins partiellement de l'assise 122 de ce siège automobile 100.

Dans cette position déployée, le deuxième élément de support est donc accessible à l'extérieur du siège automobile, c'est-à-dire, en dehors de l'espace compris sous l'assise du siège, entre cette assise 122 et le plancher 210 du véhicule automobile.

Ici, la platine 321 pivote d'un angle égal à 90 degrés entre sa position repliée et sa position déployée.

On peut évidemment prévoir que la platine pivote d'un angle différent de 90 degrés, de préférence compris entre 45 et 135 degrés.

La platine 321 du deuxième élément de support 320 est montée sur le premier élément de support 310 de telle sorte que, dans ladite position repliée du dispositif de support, la branche du L formé par la platine 321 qui coopère avec l'axe de rotation 330 est disposée à proximité d'un bord avant du siège automobile 100, sensiblement parallèlement à ce bord avant du siège automobile 100. L'autre branche du L formée par cette platine 321, ici la petite branche, s'étend vers l'arrière du siège automobile 100.

Lesdits connecteurs électriques 340 sont disposés sur la platine 321 du deuxième élément de support (figures 2 et 4) qui fait donc partie des moyens de réception des connecteurs électriques.

Les connecteurs électriques sont ici posés sur une face supérieure de cette platine 321, orientée vers l'assise du siège automobile 100, de préférence fixés sur elle par tout moyen connu de l'homme du métier, par exemple par collage, ou encore par clippage ou par des moyens de glissière.

Par ailleurs, lesdits moyens de réception des connecteurs électriques 340 du deuxième élément de support 320 comprennent des moyens de maintien des câbles électriques connectés à ces connecteurs. Ceux-ci comprennent ici au moins deux clips de câblage 324 pour le maintien de chaque câble d'alimentation 520 et de chaque câble arrière 510 relié aux connecteurs électriques 340 supportés par le dispositif de support 300. A cet effet, la platine 321 comporte des ouvertures 323 qui sont adaptées à accueillir ces clips de fixation 324 des câbles (voir figures 1 à 4). Sur les figures, certaines ouvertures 323 sont représentées sans le clip de fixation 324 correspondant.

La présence de deux clips pour chaque câble assure une fixation solide des câbles et empêche leur arrachement accidentel hors du connecteur électrique correspondant.

Par ailleurs, le long de la partie du contour de la platine 321 orientée vers l'avant du siège automobile 100, il est prévu un rebord 322 qui s'élève à partir de la platine 321, perpendiculairement à celle-ci, vers l'assise du siège. Ce rebord 322 empêche tout accès aux connecteurs 340 lorsque le dispositif de support 300 est dans sa position repliée, et se trouve logé sous le siège automobile.

Ce rebord 322 peut également comporter des ouvertures 323 accueillant des clips de fixation 324 pour la fixation des câbles électriques d'alimentation 520 et arrière 510.

On peut en outre prévoir d'autres rebords, disposés le long du contour de la platine. Ces rebords peuvent alors accueillir une partie des moyens de réception des connecteurs électriques 340.

Enfin, il est ici prévu des moyens de retenue du deuxième élément de support 320 dans sa position repliée. Il s'agit ici de moyens de retenue par passage d'un point dur. A cet effet, la platine 321 du deuxième élément de support 320 comporte, sur une face inférieure orientée vers la plaque 311 du premier élément de support 310, deux pions 351, 352 qui font saillie de cette face inférieure en direction de la plaque 311 et sont adaptés à coopérer à retenue avec deux ouvertures 361, 362 correspondantes de cette plaque 311. L'une des ouvertures 361 est formée par une fourche ménagée dans le bord de la plaque 311, tandis que l'autre ouverture 362 est une ouverture de contour fermé ménagée dans la plaque 311.

Quelle que soit la forme de l'ouverture 361, 362 de la plaque 311 du premier élément de support, lors du passage du deuxième élément de support 320 du dispositif de support 300 de sa position déployée vers sa position repliée, les pions 351, 352 de la platine 321 du deuxième élément de support 320 viennent se loger dans l'ouverture correspondante 361, 362 de la plaque 311 du premier élément de support 310 après passage d'un point dur.

Le dispositif de support 300 est alors maintenu dans sa position repliée ce qui évite tout passage accidentel de sa position repliée à sa position déployée. Il est néanmoins possible de faire repasser le deuxième élément de support 320 dans sa position déployée, par exemple pour effectuer des réparations au cours de l'utilisation du véhicule.

En variante, on peut évidemment prévoir également des moyens de retenue de la platine 321 dans la position déployée du dispositif de support 300, afin, par exemple, de rendre l'installation des câbles et des connecteurs électriques plus aisée. En outre, tout moyen de retenue connu de l'homme du métier peut être envisagé.

En variante, les moyens de fixation du premier élément de support du dispositif de support du siège peuvent également comprendre un clip, qui peut être porté par exemple par une languette d'accrochage similaire à la longuette d'accrochage de l'exemple de réalisation présenté sur les figures.

Ce clip permet par exemple de fixer le premier élément de support du dispositif de support sur l'un desdits éléments mobiles de glissière des parties latérales de l'armature du siège, à l'exclusion de l'autre élément mobile de glissière du siège.

Selon une autre variante, lesdits moyens de fixation du premier élément de support du dispositif de support autorisent sa fixation sur une autre partie de la partie latérale de l'armature, par exemple sur l'aile de cette partie latérale.

En variante encore, ledit premier élément de support peut venir de formation avec l'une desdites deux parties latérales de cette armature du siège.

Il peut par exemple venir de formation avec l'un des deux éléments mobiles de glissière des parties latérales de l'armature du siège, avec l'aile de l'une des parties latérales, ou avec toute autre partie de l'une seulement de ces deux parties latérales de l'armature du siège.

Quel que soit le mode de réalisation du dispositif de support de connecteurs électriques du siège selon l'invention, il est possible, lors du montage du véhicule, de faire pivoter la platine 321 pour la faire dépasser, au moins en partie, du bord avant de l'assise 122 du siège automobile 100. Cette platine 321 est alors très facilement accessible et l'opérateur peut facilement disposer les connecteurs électriques 340 dessus, raccorder les câbles électriques arrière 510 et les câbles électriques d'alimentation 520 du siège 100 à chaque connecteur électrique 340 et fixer ces câbles par les clips de câblage 324.

Ensuite, il suffit de faire pivoter la platine 321 vers l'arrière et de la bloquer dans sa position repliée par passage des points durs. Les connecteurs électriques 340 et les câbles arrière 510 et d'alimentation 520 associés sont alors hors d'atteinte de l'utilisateur du véhicule et ne peuvent être débranchés accidentellement, par exemple par l'action des pieds des passagers du véhicule sous le siège 100.

## Revendications

1. Siège (100) d'un véhicule automobile, comprenant une armature (120) avec deux parties latérales (121) adaptées à être fixées au châssis (200) du véhicule, et un dispositif de support (300) pour un connecteur électrique (340), ledit dispositif de support (300) comprenant un premier élément de support (310) et un deuxième élément de support (320) monté à rotation sur le premier élément de support (310) et comportant des moyens de réception (321, 324) dudit connecteur électrique (340), ledit siège étant **caractérisé en ce que** ledit premier élément de support (310) du dispositif de support (300) s'étend à partir d'uniquement une première des deux parties latérales (121) de l'armature (120) du siège (100), à l'exclusion de la deuxième partie latérale (121).

2. Siège (100) selon la revendication 1, dans lequel, ce siège (100) automobile étant monté mobile en translation sur le châssis (200) du véhicule automobile par l'intermédiaire de deux glissières (400) comportant chacune une partie mobile (130) appartenant à l'une des deux partie latérales (121) de l'armature (120) du siège (100) et une partie fixe (220) appartenant au châssis du véhicule automobile, ledit premier élément de support (310) s'étend à partir d'uniquement l'une des deux parties mobiles (130) de glissière de ce siège (100) automobile.

3. Siège (100) selon l'une des revendications précédentes, dans lequel ledit premier élément de support (310) est une pièce distincte de l'armature (120) du siège (100) et comporte des moyens de fixation (313) sur l'une exclusivement desdites deux parties latérales (121) de l'armature (120) du siège (100).

4. Siège selon la revendication précédente, dans lequel lesdits moyens de fixation du premier élément de support comprennent un clip.

5. Siège (100) selon l'une des revendications 3 et 4, dans lequel lesdits moyens de fixation (313) du premier élément de support comprennent un orifice (313) pour le passage d'une vis de fixation.

6. Siège selon l'une des revendications précédentes, dans lequel ledit premier élément de support vient de formation avec l'une exclusivement desdites deux parties latérales de cette armature du siège.

7. Siège (100) selon l'une des revendications précédentes, dans lequel lesdits premier (310) et deuxième éléments de support (320) comportent au moins chacun une partie plane (311, 321), et la partie plane (321) dudit deuxième élément de support (320) pivote parallèlement à la partie plane (311) dudit premier élément de support (310), autour d'un axe de rotation (330) disposé perpendiculairement à ces deux parties planes (311, 321).

8. Siège (100) selon l'une des revendications précédentes, dans lequel ledit deuxième élément de support (320) étant adapté à pivoter par rapport au premier élément de support (310) entre deux positions extrêmes, il est prévu des moyens de retenue du deuxième élément de support (320) au moins dans l'une de ces deux positions extrêmes.

9. Siège (100) selon l'une des revendications précédentes, dans lequel ledit deuxième élément de support (320) étant adapté à pivoter par rapport au premier élément de support (310) entre deux positions extrêmes, dans une première des deux positions extrêmes du deuxième élément de support (320), celui-ci dépasse d'une assise du siège (100) de manière à être accessible à l'extérieur du siège automobile 100, et dans la deuxième position extrême, le dispositif de support (300) est entièrement logé sous l'assise (122) du siège (100) automobile, entre lesdites deux parties latérales (121) de l'armature (120) du siège (100).

10. Véhicule automobile comportant un châssis (200) et un siège (100) monté sur ce châssis (200) conforme à l'une des revendications précédentes, dans lequel le dispositif de support (300) s'étend entre une assise de ce siège (100) et le plancher (220) du châssis (200) du véhicule automobile.

## Patentansprüche

1. Sitz (100) eines Kraftfahrzeugs, umfassend ein Gestell (120) mit zwei Seitenteilen (121), die angepasst sind, um am Rahmen (200) des Fahrzeugs befestigt zu werden, und eine Trägervorrichtung (300) für einen elektrischen Verbinder (340), wobei die genannte Trägervorrichtung (300) ein erstes Trägerelement (310) und ein zweites Trägerelement (320), welches am ersten Trägerelement (310) drehbar montiert ist und Mittel zur Aufnahme (321, 324) des genannten elektrischen Verbinders (340) aufweist, umfasst, wobei der genannte Sitz **dadurch gekennzeichnet ist, dass** sich das genannte erste Trägerelement (310) der Trägervorrichtung (300) ausgehend nur eines ersten der zwei Seitenteile (121) des Gestells (120) des Sitzes (100), unter Ausschluss des zweiten Seitenteils (121), erstreckt.

2. Sitz (100) nach Anspruch 1, bei dem, wobei dieser Sitz (100) für ein Kraftfahrzeug am Rahmen (200) des Kraftfahrzeugs über zwei Schienen (400), die jeweils einen beweglichen Teil (130), der zu einem der zwei Seitenteile (121) des Gestells (120) des Sitzes (100) gehört, und einen festen Teil (220), der zum Rahmen des genannten Kraftfahrzeugs gehört, aufweisen, verschiebbar montiert ist, sich das genannte erste Trägerelement (310) ausgehend nur eines der zwei beweglichen Teile (130) einer Schiene dieses Sitzes (100) für ein Kraftfahrzeug erstreckt.

3. Sitz (100) nach einem der vorangehenden Ansprüche, bei dem das genannte erste Trägerelement (310) ein vom Gestell (120) des Sitzes (100) gesondertes Stück ist und Mittel zur Befestigung (313) an ausschließlich einem der zwei Seitenteile (121) des Gestells (120) des Sitzes (100) aufweist.

4. Sitz nach dem vorangehenden Anspruch, bei dem die genannten Mittel zur Befestigung des ersten Trägerelements eine Klammer umfassen.

5. Sitz (100) nach einem der Ansprüche 3 und 4, bei dem die genannten Mittel zur Befestigung (313) des ersten Trägerelements eine Öffnung (313) zum Hindurchführen einer Befestigungsschraube umfassen.

6. Sitz nach einem der vorangehenden Ansprüche, bei dem das genannte erste Trägerelement mit ausschließlich einem der genannten zwei Seitenteile dieses Gestells des Sitzes gebildet ist.

7. Sitz (100) nach einem der vorangehenden Ansprüche, bei dem das genannte erste (310) und zweite Trägerelement (320) mindestens jeweils einen ebenen Teil (311, 321) aufweisen, und der ebene Teil (321) des genannten zweiten Trägerelements (320) parallel zum ebenen Teil (311) des genannten ersten Trägerelements (310) um eine Drehachse (330), die senkrecht zu diesen zwei ebenen Teilen (311, 321) angeordnet ist, schwenkt.

8. Sitz (100) nach einem der vorangehenden Ansprüche, bei dem, wobei das genannte zweite Trägerelement (320) angepasst ist, um bezogen auf das erste Trägerelement (310) zwischen zwei Extrempositionen zu schwenken, Mittel zum Zurückhalten des zweiten Trägerelements (320) mindestens in einer dieser zwei Extrempositionen vorgesehen sind.

9. Sitz (100) nach einem der vorangehenden Ansprüche, bei dem, wobei das genannte zweite Trägerelement (320) angepasst ist, um bezogen auf das erste Trägerelement (310) zwischen zwei Extrempositionen zu schwenken, in einer ersten der zwei Extrempositionen des zweiten Trägerelements (320) dieses über eine Sitzfläche des Sitzes (100) hinausragt, sodass es außerhalb des Sitzes (100) für ein Kraftfahrzeug erreichbar ist, und in der zweiten Extremposition die Trägervorrichtung (300) vollständig unter der Sitzfläche (122) des Sitzes (100) für ein Kraftfahrzeug, zwischen den genannten zwei Seitenteilen (121) des Gestells (120) des Sitzes (100), untergebracht ist.

10. Kraftfahrzeug, aufweisend einen Rahmen (200) und einen Sitz (100), der auf diesem Rahmen (200) montiert ist, nach einem der vorangehenden Ansprüche, bei dem sich die Trägervorrichtung (300) zwischen einer Sitzfläche dieses Sitzes (100) und dem Boden (220) des Rahmens (200) des Kraftfahrzeugs erstreckt.

## Claims

1. Motor vehicle seat (100) comprising a frame (120) with two lateral portions (121) designed to be attached to the chassis (200) of the vehicle, and a support device (300) for an electrical connector (340), said support device (300) comprising a first support element (310) and a second support element (320) mounted rotatably on the first support element (310) and comprising means (321, 324) for receiving said electrical connector (340), said seat being **characterized in that** said first support element (310) of the support device (300) extends from only a first of the two lateral portions (121) of the frame (120) of the seat (100), exclusive of the second lateral portion (121).

2. Seat (100) according to Claim 1, in which, this motor vehicle seat (100) being mounted so as to be able to move in translation on the chassis (200) of the motor vehicle via the intermediary of two rails (400) each comprising a mobile portion (130) belonging to one of the two lateral portions (121) of the frame (120) of the seat (100) and a fixed portion (220) belonging to the chassis of the motor vehicle, said first support element (310) extends from only one of the two mobile portions (130) of the rail of this motor vehicle seat (100).

3. Seat (100) according to either of the preceding claims, in which said first support element (310) is a part distinct from the frame (120) of the seat (100) and comprises means (313) for attaching to exclusively one of said two lateral portions (121) of the frame (120) of the seat (100).

4. Seat according to the preceding claim, in which said attachment means of the first support element comprise a clip.

5. Seat (100) according to either of Claims 3 and 4, in which said attachment means (313) of the first support element comprise an opening (313) through which an attachment screw can pass.

6. Seat according to one of the preceding claims, in which said first support element is formed as one with exclusively one of said two lateral portions of this frame of the seat.

7. Seat (100) according to one of the preceding claims, in which said first (310) and second (320) support elements comprise, at least each, a planar portion (311, 321), and the planar portion (321) of said second support element (320) pivots parallel to the planar portion (311) of said first support element (310), about an axis of rotation (330) arranged perpendicular to these two planar portions (311, 321).

8. Seat (100) according to one of the preceding claims, in which, said second support element (320) being designed to pivot with respect to the first support element (310) between two end positions, there are provided means for retaining the second support element (320) in at least one of these two end positions.

9. Seat (100) according to one of the preceding claims, in which, said second support element (320) being designed to pivot with respect to the first support element (310) between two end positions, in a first one of these two end positions of the second support element (320), the latter projects beyond a seat cushion of the seat (100) so as to be accessible outside the motor vehicle seat (100), and, in the second end position, the support device (300) is housed in its entirety beneath the seat cushion (122) of the motor vehicle seat (100), between said two lateral portions (121) of the frame (120) of the seat (100).

10. Motor vehicle comprising a chassis (200) and a seat (100), mounted on this chassis (200), in accordance with one of the preceding claims, in which the support device (300) extends between a seat cushion of this seat (100) and the floor (220) of the chassis (200) of the motor vehicle.
